# EUROPEAN PATENT SPECIFICATION

(11) **EP 4 187 219 B1**
(45) Date of publication and mention of the grant of the patent: **28.08.2024**
(21) Application number: 21210667.8
(22) Date of filing: 26.11.2021
(51) Int. Cl.: G01K 1/024

(54) **SYSTEM FOR AIDING WITH THE CONTROL OF FOOD COOKING**
SYSTEM ZUR UNTERSTÜTZUNG BEI DER STEUERUNG DES GARENS VON LEBENSMITTELN
SYSTÈME D'AIDE AU CONTRÔLE DE LA CUISSON DES ALIMENTS

(43) Date of publication of application: 31.05.2023
(73) Proprietor: Mastrad, 75012 Paris (FR)
(72) Inventor: LION, Mathieu, 75012 Paris (FR); PUONG, Samuel, 75012 Paris (FR); GUIPAUD, Albin, 75012 Paris (FR); MONTEIRO, Luis, 75012 Paris (FR)
(74) Representative: Cabinet Netter

(56) References cited:
- EP-A1- 3 862 735
- US-B2- 7 128 466

## Description

### FIELD OF THE INVENTION

The present invention concerns the field of domestic kitchen appliance.

### BACKGROUND

Most of the time, users need to know what is happening during cooking, particularly in terms of temperature. Thermometers, or temperature probes, are intended to be sunk into foodstuffs during cooking in order to monitor the internal temperature thereof. Such thermometers are not easy to use with container-and-cover assemblies in the closed state. Some of the models currently on the market link the sensor unit of the thermometer to a receiving unit through a cable. This allows for a display of the temperature outside the cooking apparatus or pan.

US 7 128 466 B2 discloses a thermometer system for the measurement and the display of temperature data taken at two separate locations within an oven. The system provides an elongated probe connected with a flexible electronic cable. The elongated probe represents the thermally conductive shaft including a temperature sensor in the tip and a temperature sensor in the end opposite the tip. The signals are relayed from the sensors through the cable to a box containing electronics.

US 2022/003610 A1 describes a temperature sensor configured to detect the temperature of a measurement object and a detection unit configured to detect the presence of the measurement object by means of Hall effect.

### BRIEF SUMMARY

However, users do not wish to have a dedicated temperature display support. The kitchen flat surfaces are often occupied by food, dishes, apparatuses and accessories. Otherwise, in open kitchen, users wish to have empty surfaces and accessories be stored in cupboards. An aim of the invention is to provide a system for aiding with the control of food cooking. An aim of the invention is to provide a compact and inconspicuous system for aiding with the control of food cooking.

The invention proposes a system for aiding with the control of food cooking, comprising:
a thermometer probe including:
   a thermally conductive shaft with at least one temperature sensor, wherein the thermally conductive shaft is positioned in the interior of a heated milieu, the thermally conductive shaft including a tip at a first end, and a wire connection at a second end, the at least one temperature sensor being positioned inside the thermally conductive shaft, close to the tip, and in thermal contact with the thermally conductive shaft ;
   a first wire connected to said wire connection to convey temperature data from the temperature sensor ;
a box connected to the first wire, the box having an outer surface ;
a contactless proximity sensor positioned inside the box, the proximity sensor being active on at least a region of the outer surface of the box to detect a human presence ;
a second wire mechanically and electrically connected to the box to convey data from the temperature sensor and from the proximity sensor, the second wire being equipped with a USB connector at and end opposite the box.

According to the invention, the system is configured to send data from the one ore more temperature sensor to a cell phone in OTG mode connected to the USB port thus allowing a temperature data monitoring by or display on the cell phone.

According to the invention, the system is configured to send data from at least one temperature sensor to a cell phone in OTG mode connected to the USB port thus allowing a temperature data monitoring by or display on the cell phone.

According to the invention, the system is configured to send data from the capacitive sensor of the box to a cell phone in OTG mode connected to the USB port thus allowing a temperature data monitoring by or display on the cell phone. The cell phone may be activated by the data from the proximity sensor and therefore display the temperature measured by the first sensor and received in the data from the first temperature sensor. There is neither need to contact the cell phone by a hand of a user, nor to approach a hand of a user close to the cell phone. The user moves his hand close to the box so as to generate a variation of the impedance detected by the proximity sensor, then causing a display of the temperature on the celle phone. As the box is robust, the risk of damage is reduced compared to a cell phone.

In an embodiment, the box is deprived of display zone.

In an embodiment, a handle is provided at the second end of the thermally conductive shaft, the handle surrounding the first wire, the handle being thermally insulated. The thermometer probe can be easily inserted in a foodstuff and removed.

In an embodiment, the box has a planar surface forming said region. Handling and cleaning the box is easy.

In an embodiment, the box is waterproof.

In an embodiment, the box has a planar surface opposite said region, the planar surface being designed to support the box. The box is stably supported by a kitchen furniture.

In an embodiment, the box comprises at least three legs opposite said region, the legs being designed to support the box. The box may remain stable even in case of support uneveness.

In an embodiment, the planar surfaces are parallel. Approaching a hand towards the planar surface is an intuitive movement.

In an embodiment, the box comprises at least one color changing light source indicating a preset temperature threshold measured by the temperature sensor and calculated by a microprocessor mounted in the box. The light source may be a colour changing LED.

In an embodiment, the box comprises a sound emitter configured to emit a temperature alert sound measured by the temperature sensor and calculated by a microprocessor included in the box. The sound emitter may be a buzzer ou a voice speaker.

In an embodiment, the box comprises a NFC component configured to read and/or set the temperature threshold and a time threshold from the box.

In an embodiment, the box comprises a NFC component configured to transfer temperature and time information from a box microprocessor to a remote terminal, such as a smart phone, when approaching such terminal to the box.

In an embodiment, the first wire is permanently connected to the wire connection of the thermally conductive shaft and the second wire is permanently connected to the box. The system is less prone to part loss.

In an embodiment, the first wire and the box are removably connected.

In an embodiment, the first wire and the box are connected by a jack socket.

In an embodiment, the proximity sensor comprises a capacitive sensor. A high reliability is obtained. A remote use of the system is possible with dirty hands. The cell phone will come out of the sleep mode upon receipt of the signal from the box generated by the proximity sensor.

In an embodiment, the proximity sensor has a detection area between 1 and 10 cm², preferably between 2 and 6 cm². The box is compact.

In an embodiment, the proximity sensor comprises a flat electrode, the flat electrode forming a capacitor with or without a body of a user; a resistance, the resistance and the capacitor forming a RC circuit having a variable impedance, the capacity of the capacitor increasing as the user body comes closer to the flat electrode; and a member monitoring an impedance change of the RC circuit and configured in response to an increase of the impedance to send a signal. Monitoring the impedance change is easy.

Changing the threshold of the impedance detection is possible.

In an embodiment, the flat electrode comprises a copper or aluminium plate. A good sensitivity is obtained.

In an embodiment, the flat electrode has a surface between 1 and 10 cm², preferably between 2 and 5 cm².

In an embodiment, the USB connector of the second wire is a OTG connector.

In an embodiment, a smartphone authentification chip, for example an Apple^{®} authentification chip is provided in the box. The smartphone authentification chip is configured to communicate data with a smartphone by wire for example with the Lighting port for some smartphones or with the USB-C port for tablets. Some smartphone manufacturers require to insert a dedicated component in the box for allowing a communication with the smartphone. The smartphone will check the presence of the smartphone authentification chip to allow communication. Otherwise, communication is not allowed.

According to the invention, there is provided a wired system for outputting a cell phone wakeup signal and food cooking temperature information according to a measurement made by a thermometer probe to be inserted into a foodstuff before cooking and to be removed after cooking.

### BRIEF DESCRIPTION OF THE DRAWINGS

The present invention will be better understood by studying the detailed description of a few embodiments given by way of entirely non-limiting example, and illustrated by the accompanying drawings in which:
FIG. 1 is a schematic view of a probe of a device according to an embodiment;
FIG. 2 is a schematic view of a system according to an embodiment;
FIG. 3 is a block diagram of a system according to an embodiment;
FIG. 4 is a schematic view of a according to an embodiment.

While the invention is susceptible to various modifications and alternative forms, specific embodiments thereof are shown by way of example in the drawings and will herein be described in detail.

### DETAILED DESCRIPTION OF THE PREFERRED EMBODIMENT

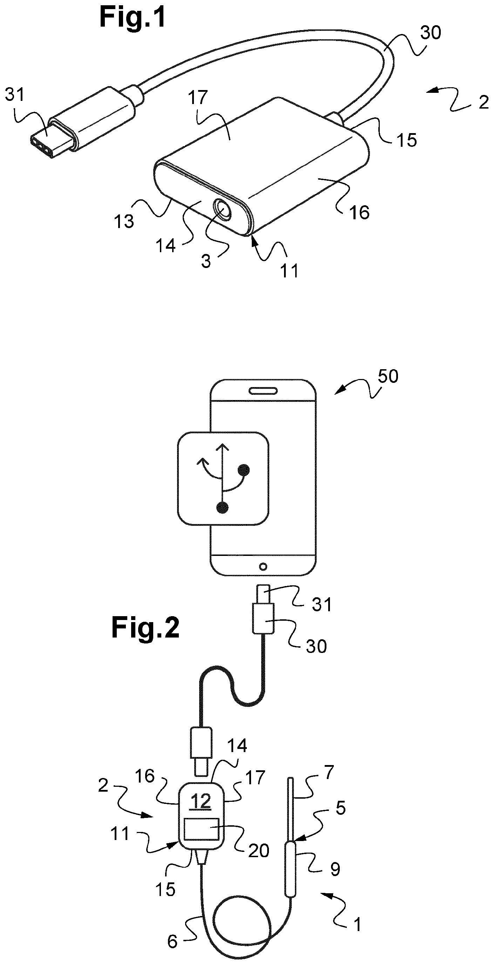

As illustrated in the figures, the system for aiding with the control of food cooking comprises two main parts, a first part 1 shown on figures 1 and 2 and a second part 2 shown on figure 2. The first part 1 and the second part 2 are configured to be connected during use, by a connection. The connection, as shown on figures 1 and 2, is a jack socket 3 and plug 4.

The first part 1 is a sensing part. The first part 1 comprises a thermometer probe 5 and a first wire 6 connected to the thermometer probe 5 to convey temperature data. More precisely, the first part 1 is designed to be inserted into a foodstuff for temperature monitoring.

The thermometer probe 5 comprises a thermally conductive shaft 7 and one or more temperature sensors. The thermally conductive shaft 7 is configured to be positioned in the interior of a heated milieu, such as a foodstuff. The thermally conductive shaft 7 includes a tip at a first end and a wire connection 8 at a second end. The thermally conductive shaft 7 includes a tubular body between the first end and the second end. The tubular body and the tip may be made in one piece, for example in stainless steel.

A temperature sensor is positioned inside the thermally conductive shaft, close to the tip or within the tip. Said first temperature sensor is in thermal contact with the thermally conductive shaft. Said first temperature sensor may be secured to the the thermally conductive shaft by bonding or by a biasing element. The temperature sensor may be a thermistor 40 or a thermocouple 41.

The thermally conductive shaft may include a plurality of temperature sensors. The temperature sensor(s) may be NTC thermistances or thermocouples.

The thermometer probe 5 comprises a handle 9. The handle 9 is arranged at the second end of the thermally conductive shaft. The handle 9 surrounds the first wire in a region close to the thermally conductive shaft. The handle 9 protects the first wire at the output of the thermally conductive shaft. The handle 9 is thermally insulating. In other terms, the handle 9 is made of a material that is more insulating than the material of the thermally conductive shaft.

The thermometer probe 5 comprises a wire connection. The wire connection is arranged at the second end. The wire connection is connected to the temperature sensor 40, 41.

The thermometer probe 5 comprises the first wire 6. The first wire 6 is connected to the wire connection 8 to convey temperature data from the at least one temperature sensor 40, 41. The first wire 6 has a length of between 30 and 120 cm, preferably around 100 cm. The first wire 6 may be shielded or may be coaxial. The first wire 6 is protected by a heat resistant plastic sheet. On figure 2, the end of the first wire opposite the thermometer probe 5 is equipped with a male plug, for example a jack plug 4.

In an embodiment shown on figure 2, the first wire 6 is permanently connected to the wire connection 8 of the thermally conductive shaft

The second part 2 comprises a box 11 having an outer surface. The box 11 is connected to the first wire 6, for example by means of a jack socket 3. In other terms, the first wire 6 and the box 11 are removably connected, see figures 1 & 2.

In an other embodiment, the first wire 6 and the box 11 are permanently connected.

The box 11 is watertight at least to projections of liquid. The box 11 has main parallel surfaces 12, 13, parallel end surfaces 14, 15 and rounded lateral surfaces 16, 17. The box 11 has two opposite planar surfaces 12, 13. One of the planar surfaces is designed to support the box 11.

In an embodiment, legs protrude from said one of the planar surfaces. The box 11 comprises at least three legs opposite said region, the legs being designed to support the box 11.

The box 11 may be provided with at least one color changing light source, for example a LED. The light source is mounted through an upper surface of the box 11. The upper surface may be opposite the legs. The color of the changing light source is representative of the temperature measured by the sensor and calculated by a microprocessor mounted in the box 11. The change of color is carried out at one or more preset temperature threshold. For example, for a roasted beef, the preset temperature threshold can be set at XX°C.

The box 11 may be provided with at least one sound emitter, for example a loudspeaker. The sound emitter is mounted through an upper surface of the box 11. The upper surface may be opposite the legs. The sound is emitted by the sound emitter according to the temperature measured by the sensor and calculated by a microprocessor mounted in the box 11. The sound emission is carried out at one or more preset temperature threshold. For example, for a roasted chicken, the preset temperature threshold can be set at XX°C.

In a variant, the end surfaces are rounded.

The female socket 3 forms a hole in one of the end surfaces.

The second part 2 comprises a contactless proximity sensor 20. The proximity sensor 20 is positioned inside the box 11. The proximity sensor 20 faces one of the main parallel surfaces. Said one of the main parallel surfaces is a planar surface. The proximity sensor 20 is active on at least a region of the outer surface of the box 11 to detect a contactless human presence. The proximity sensor 20 may be active on both main parallel surfaces. The contactless proximity sensor 20 comprises an electrode while the human body of an user if forming an other electrode. Both electrodes are forming a capacitor whose capacity depends on the distance between both electrodes, i.e. between the electrode of the proximity sensor 20 and the human body of the user. However, the capacitor may be formed with any other device or part. Without the human body of an user, the capacitance of the capacitor is very low.

The electrode of the capacitive sensor 20 may have a surface, i.e. a detection area, between 1 and 10 cm², preferably between 2 and 8 cm². A surface of about 4-6 cm² is preferred. The electrode comprises a copper or aluminium plate.

The electrode of the proximity sensor 20 is as flat as possible. The electrode of the proximity sensor 20 is electrically connected to a resistance 28 to form a RC circuit. The proximity sensor 20 is a capacitive sensor. The resistance 28 and the capacitor forms a RC circuit of variable impedance, the capacity of the capacitor increasing as the user body comes closer to the flat electrode. The second part 2 comprises a monitoring member monitoring an impedance change of the RC circuit and configured in response to an increase of the impedance to send a signal. In an embodiment, the resistance 28 is 470 kΩ and the capacity is 20 pF. The monitoring member comprises a microcontroller 21connected to the RC circuit of the proximity sensor 20. The microcontroller is also connected to the at least one temperature sensor 40, 41 via the first wire 6. If the temperature sensor is a thermocouple, then the box 11 comprises a hardware amplifier 22 for amplifying the temperature signal upstream of the microcontroller. In other terms, the amplifier 22 is mounted between the first wire 6 and the microcontroller 21.

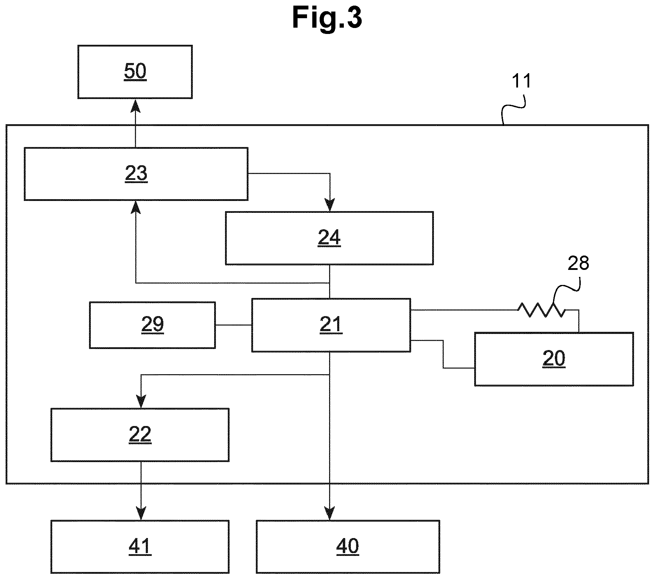

In the box 11 may also be provided an analog/digital converter receiving signals from the first wire and the proximity sensor 20, cf figure 3. The analog/digital converter outputs digital data. The output of the analog/digital converter can be according to the XXX standart. The analog/digital converter can be integrated into the microcontroller.

The microcontroller 21 has an output connected to a USB connector 23 provided in the box 11. The microcontroller 21 has a power input connected to a voltage regulator 24. The voltage regulator 24 is mounted in the box 11. The voltage regulator 24 is configured to supply a dc voltage to the microcontroller 21. During use, the USB connector 23 is connected to a smartphone.

In an embodiment, two pins of the microcontroller 21 are connected to the RC circuit. The first pin outputs a rectangular signal. The second pin receive the signal modified by the RC circuit. As the body comes closer to the first electrode, the capacity increases and charging time of the capacity increases.

The second part 2 comprises a second wire 30 mechanically connected to the box 11 and equipped with a plug 31 to connect to a smartphone. The second wire 30 is electrically connected to the microcontroller 21 to receive temperature and proximity data. Data is conveyed from the first and second temperature sensors and from the proximity sensor 20 to the smartphone with a USB protocol. The smartphone may be equipped with an app to display temperature information including visual and or sound warning signals.

The microcontroller 21 calculates the variation of the capacity. The variation of the capacity results from the variation of distance between a human body, for example a finger of a hand, and the proximity sensor 20. Upon detection of the human body close enough to the proximity sensor 20, the microcontroller 21 triggers an event for which it is programmed. The event may be a sound alarm from the box 11, a light alarm from the box 11, a wakeup of the smartphone, a sound alarm from the smartphone, a chosen display on the smartphone according to the app. The microcontroller 21 may trigger a signal of the USB connection that triggers a reactivation of the application for display said application on the smartphone.

As shown on figure 3, the box 11 comprises a NFC component 29. The NFC component 29 is configured to transfer data at small distance. For transferring data to a smartphone, there is no contact between the NFC component 29 and the smartphone. There may be contact between an outer surface of the box 11 and the smartphone. The transferred data may comprise temperature measured by the temperature sensor 40, 41. The transferred data may comprise time information related to temperature. The transferred data are supplied to the NFC component 29 by the microprocessor 21 of the box 11.

The second wire 30 comprises a free end equipped with a USB connector, for example a USB-C connector. Said free end is opposite the box 11. The length of the second wire 30 may be between 10 and 30 cm, preferably around 15 cm.

In an embodiment shown on figure 1, the second wire 30 is permanently connected to the box 11.

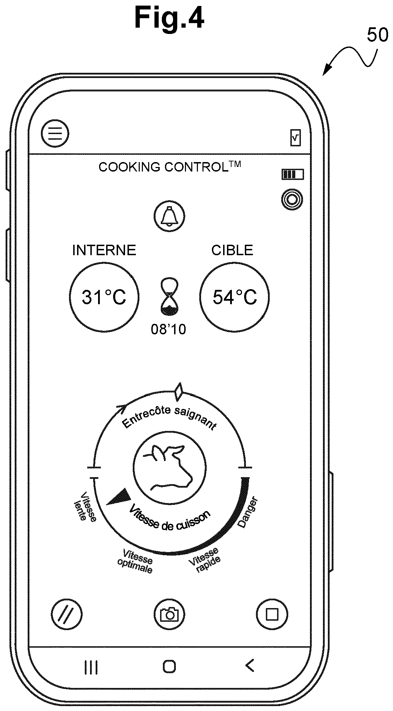

The second part 2 is able to be connected to a smartphone, see figure 2, having a display as shown on figure 4. The system is configured to report temperature through the USB-C plug to a smartphone. The smartphone is equipped with an app to read the temperatures from the system and to display the temperatures, see figure 4. In a variant, the app is configured to display the temperature from the at least one temperature sensor 40, 41 and to generate an alarm based on the temperature from the two temperature sensors. The smartphone is setup in OTG (host) mode in order to received data through the USB-C.

Power supply to the system is provided by the smartphone or by an other power source of energie such as a battery. Power supply is needed by the analog/digital converter.

On figure 4, is shown an example of display on the smartphone with temperature value.

In an embodiment, a system for aiding with the control of food cooking, comprises a thermometer probe including a thermally conductive housing with at least one temperature sensor, wherein the thermally conductive housing is positioned on a heated surface, the thermally conductive housing including a flat surface, and a wire connection at a second end, the at least one temperature sensor being positioned inside the thermally conductive housing, close to said flat surface, and in thermal contact therewith and a first wire connected to said wire connection to convey temperature data from the temperature sensor. The system comprises a box connected to the first wire, the box having an outer surface. The system comprises a contactless proximity sensor positioned inside the box, the proximity sensor being active on at least a region of the outer surface of the box to detect a human presence. The system comprises a second wire mechanically and electrically connected to the box to convey data from the temperature sensor and from the proximity sensor, the second wire being equipped with a USB connector at and end opposite the box.

In an embodiment, a system for aiding with the control of food cooking, comprises a chemical probe including a housing with at least one chemical sensor, wherein the housing is positioned in a liquid or gas, and a wire connection, the at least one chemical sensor being positioned inside the housing, and a first wire connected to said wire connection to convey chemical data from the chemical sensor. The system comprises a box connected to the first wire, the box having an outer surface. The system comprises a contactless proximity sensor positioned inside the box, the proximity sensor being active on at least a region of the outer surface of the box to detect a human presence. The system comprises a second wire mechanically and electrically connected to the box to convey data from the chemical sensor and from the proximity sensor, the second wire being equipped with a USB connector at and end opposite the box. The chemical sensor may include an oil quality sensor, a salinity sensor, a CO2 sensor, a moisture sensor.

## Claims

1. A system for aiding with the control of food cooking, comprising:
a thermometer probe (5) including:
a thermally conductive shaft (7) with at least one temperature sensor (40, 41), wherein the thermally conductive shaft is positionable in the interior of a heated milieu, the thermally conductive shaft (7) including a tip at a first end, and a wire connection (8) at a second end, the at least one temperature sensor (40, 41) being positioned inside the thermally conductive shaft (7), close to the tip, and in thermal contact with the thermally conductive shaft (7);
a first wire (6) connected to said wire connection (8) to convey temperature data from the temperature sensor (40,41) ;
a box (11) connected to the first wire (6), the box (11) having an outer surface ;
a contactless proximity sensor (20) positioned inside the box (11), the proximity sensor (20) being active on at least a region of the outer surface of the box (11) to detect a human presence ;
a second wire (30) mechanically and electrically connected to the box (11) to convey data from the temperature sensor (40,41) and from the proximity sensor (20), the second wire (30) being equipped with a USB connector (31) at an end opposite the box (11).

2. System according to claim 1, wherein a handle (9) is provided at the second end of the thermally conductive shaft, the handle (9) surrounding the first wire (6), the handle (9) being thermally insulated.

3. System according to claim 1 or 2, wherein the box (11) has a planar surface forming said region.

4. System according to claim 1, 2 or 3, wherein the box (11) has a planar surface opposite said region, the planar surface being designed to support the box (11).

5. System according to any of the preceding claims, wherein the box (11) comprises at least three legs opposite said region, the legs being designed to support the box (11).

6. System according to any of the preceding claims, wherein the box (11) comprises at least one color changing light source indicating a preset temperature threshold measured by the temperature sensor (40,41) and calculated by a microprocessor mounted in the box (11).

7. System according to any of the preceding claims, wherein the box (11) comprises a sound emitter configured to emit a temperature alert sound measured by the temperature sensor (40,41) and calculated by a microprocessor included in the box (11).

8. System according to any of the preceding claims, wherein the box (11) comprises a NFC component (29) configured to transfer temperature and time information from a box (11) microprocessor to a remote terminal, such as a smart phone, when approaching such terminal to the box (11).

9. System according to any of the preceding claims, wherein the first wire is permanently connected to the wire connection of the thermally conductive shaft and the second wire is permanently connected to the box (11).

10. System according to any of the preceding claims, wherein the first wire and the box (11) are removably connected.

11. System according to claim 9, wherein the first wire and the box (11) are connected by a jack socket.

12. System according to any of the preceding claims, wherein the proximity sensor (20) comprises a capacitive sensor.

13. System according to any of the preceding claims, wherein the proximity sensor (20) has a detection area between 1 and 10 cm², preferably between 2 and 6 cm².

14. System according to any of the preceding claims, wherein the proximity sensor (20) comprises a flat electrode, the flat electrode forming a capacitor with or without a body of a user; a resistance (28), the resistance (28) and the capacitor forming a RC circuit having a variable impedance, the capacity of the capacitor increasing as the user body comes closer to the flat electrode; and a member monitoring an impedance change of the RC circuit and configured in response to an increase of the impedance to send a signal.

15. System according to any of the preceding claims, wherein the flat electrode comprises a copper or aluminium plate.

## Patentansprüche

1. Ein System zur Unterstützung bei der Kontrolle des Kochens von Lebensmitteln, bestehend aus:
eine Thermometersonde (5) mit:
einen wärmeleitenden Schaft (7) mit mindestens einem Temperatursensor (40, 41), wobei der wärmeleitende Schaft im Inneren eines beheizten Milieus positionierbar ist, wobei der wärmeleitende Schaft (7) eine Spitze an einem ersten Ende und eine Drahtverbindung (8) an einem zweiten Ende aufweist, wobei der mindestens eine Temperatursensor (40, 41) innerhalb des wärmeleitenden Schafts (7) nahe der Spitze und in thermischem Kontakt mit dem wärmeleitenden Schaft (7) positioniert ist;
einen ersten Draht (6), der mit der Drahtverbindung (8) verbunden ist, um Temperaturdaten von dem Temperatursensor (40, 41) zu übertragen;
ein Gehäuse (11), das mit dem ersten Draht (6) verbunden ist, wobei das Gehäuse (11) eine Außenfläche aufweist; einen berührungslosen Näherungssensor (20), der im Inneren des Gehäuses (11) angeordnet ist, wobei der Näherungssensor (20) auf mindestens einem Bereich der Außenfläche des Gehäuses (11) aktiv ist, um die Anwesenheit eines Menschen zu erfassen;
ein zweites Kabel (30), das mechanisch und elektrisch mit dem Gehäuse (11) verbunden ist, um Daten vom Temperatursensor (40, 41) und vom Näherungssensor (20) zu übertragen,
wobei das zweite Kabel (30) an einem dem Gehäuse (11) gegenüberliegenden Ende mit einem USB-Stecker (31) ausgestattet ist.

2. System nach Anspruch 1, bei dem ein Griff (9) am zweiten Ende des wärmeleitenden Schafts vorgesehen ist, wobei der Griff (9) den ersten Draht (6) umgibt und der Griff (9) wärmeisoliert ist.

3. System nach Anspruch 1 oder 2, wobei das Gehäuse (11) eine ebene Oberfläche aufweist, die den genannten Bereich bildet.

4. System nach Anspruch 1, 2 oder 3, wobei das Gehäuse (11) eine dem Bereich gegenüberliegende ebene Fläche aufweist, die zum Abstützen des Gehäuses (11) ausgebildet ist.

5. System nach einem der vorhergehenden Ansprüche, wobei der Kasten (11) mindestens drei Schenkel gegenüber dem Bereich aufweist, wobei die Schenkel zum Abstützen des Kastens (11) ausgebildet sind.

6. System nach einem der vorhergehenden Ansprüche, wobei der Kasten (11) mindestens eine farbwechselnde Lichtquelle aufweist, die einen voreingestellten Temperaturschwellenwert anzeigt, der von dem Temperatursensor (40, 41) gemessen und von einem in dem Kasten (11) angebrachten Mikroprozessor berechnet wird.

7. System nach einem der vorhergehenden Ansprüche, wobei der Kasten (11) einen Tonsender umfasst, der so konfiguriert ist, dass er einen Temperaturwarnton abgibt, der von dem Temperatursensor (40, 41) gemessen und von einem in dem Kasten (11) enthaltenen Mikroprozessor berechnet wird.

8. System nach einem der vorhergehenden Ansprüche, wobei die Box (11) eine NFC-Komponente (29) umfasst, die so konfiguriert ist, dass sie Temperatur- und Zeitinformationen von einem Mikroprozessor der Box (11) an ein entferntes Endgerät, wie beispielsweise ein Smartphone, überträgt, wenn sich ein solches Endgerät der Box (11) nähert.

9. System nach einem der vorhergehenden Ansprüche, wobei der erste Draht dauerhaft mit dem Drahtanschluss der wärmeleitenden Welle und der zweite Draht dauerhaft mit dem Gehäuse (11) verbunden ist.

10. System nach einem der vorhergehenden Ansprüche, wobei der erste Draht und das Gehäuse (11) lösbar verbunden sind.

11. System nach Anspruch 9, wobei der erste Draht und das Gehäuse (11) durch eine Klinkenbuchse verbunden sind.

12. System nach einem der vorhergehenden Ansprüche, wobei der Näherungssensor (20) einen kapazitiven Sensor umfasst.

13. System nach einem der vorhergehenden Ansprüche, wobei der Näherungssensor (20) eine Erfassungsfläche zwischen 1 und 10 cm2, vorzugsweise zwischen 2 und 6 cm2 aufweist.

14. System nach einem der vorhergehenden Ansprüche, wobei der Näherungssensor (20) eine flache Elektrode umfasst, wobei die flache Elektrode mit oder ohne einen Körper eines Benutzers einen Kondensator bildet; einen Widerstand (28), wobei der Widerstand (28) und der Kondensator eine RC-Schaltung mit einer variablen Impedanz bilden, wobei die Kapazität des Kondensators zunimmt, wenn sich der Körper des Benutzers der flachen Elektrode nähert; und ein Element, das eine Impedanzänderung der RC-Schaltung überwacht und als Reaktion auf eine Erhöhung der Impedanz konfiguriert ist, um ein Signal zu senden.

15. System nach einem der vorhergehenden Ansprüche, wobei die flache Elektrode eine Kupfer- oder Aluminiumplatte umfasst.

## Revendications

1. Système d'aide au contrôle de la cuisson des aliments,
comprenant :
une sonde thermométrique (5) comprenant
une tige thermoconductrice (7) avec au moins un capteur de température (40, 41), dans laquelle la tige thermoconductrice peut être positionnée à l'intérieur d'un milieu chauffé, la tige thermoconductrice (7) comprenant une pointe à une première extrémité, et une connexion filaire (8) à une seconde extrémité, le au moins un capteur de température (40, 41) étant positionné à l'intérieur de la tige thermoconductrice (7), près de la pointe, et en contact thermique avec la tige thermoconductrice (7) ;
un premier fil (6) connecté à ladite connexion de fil (8) pour transmettre les données de température du capteur de température (40, 41) ;
un boîtier (11) connecté au premier fil (6), le boîtier (11) ayant une surface extérieure ; un capteur de proximité sans contact (20) positionné à l'intérieur du boîtier (11), le capteur de proximité (20) étant actif sur au moins une région de la surface extérieure du boîtier (11) pour détecter une présence humaine ;
un deuxième fil (30) relié mécaniquement et électriquement à la boîte (11) pour transmettre les données du capteur de température (40, 41) et du capteur de proximité (20), le deuxième fil (30) étant équipé d'un connecteur USB (31) à une extrémité opposée à la boîte (11).

2. Système selon la revendication 1, dans lequel une poignée (9) est prévue à la seconde extrémité de la tige thermoconductrice, la poignée (9) entourant le premier fil (6), la poignée (9) étant thermiquement isolée.

3. Système selon la revendication 1 ou 2, dans lequel la boîte (11) a une surface plane formant ladite région.

4. Système selon la revendication 1, 2 ou 3, dans lequel la boîte (11) présente une surface plane opposée à ladite région, la surface plane étant conçue pour supporter la boîte (11).

5. Système selon l'une quelconque des revendications précédentes, dans lequel la boîte (11) comprend au moins trois pieds en face de ladite région, les pieds étant conçus pour soutenir la boîte (11).

6. Système selon l'une quelconque des revendications précédentes, dans lequel la boîte (11) comprend au moins une source lumineuse à couleur changeante indiquant un seuil de température prédéfini mesuré par le capteur de température (40,41) et calculé par un microprocesseur monté dans la boîte (11).

7. Système selon l'une des revendications précédentes, dans lequel la boîte (11) comprend un émetteur sonore configuré pour émettre un son d'alerte de température mesuré par le capteur de température (40,41) et calculé par un microprocesseur inclus dans la boîte (11).

8. Système selon l'une quelconque des revendications précédentes, dans lequel la boîte (11) comprend un composant NFC (29) configuré pour transférer les informations de température et d'heure d'un microprocesseur de la boîte (11) à un terminal distant, tel qu'un téléphone intelligent, lorsqu'on approche ce terminal de la boîte (11).

9. Système selon l'une des revendications précédentes, dans lequel le premier fil est connecté en permanence à la connexion de fil de l'arbre thermoconducteur et le second fil est connecté en permanence à la boîte (11).

10. Système selon l'une quelconque des revendications précédentes, dans lequel le premier fil et la boîte (11) sont connectés de manière amovible.

11. Système selon la revendication 9, dans lequel le premier fil et la boîte (11) sont reliés par une prise jack.

12. Système selon l'une quelconque des revendications précédentes, dans lequel le capteur de proximité (20) comprend un capteur capacitif.

13. Système selon l'une quelconque des revendications précédentes, dans lequel le capteur de proximité (20) a une zone de détection comprise entre 1 et 10 cm2, de préférence entre 2 et 6 cm2.

14. Système selon l'une quelconque des revendications précédentes, dans lequel le capteur de proximité (20) comprend une électrode plate, l'électrode plate formant un condensateur avec ou sans le corps d'un utilisateur ; une résistance (28), la résistance (28) et le condensateur formant un circuit RC à impédance variable, la capacité du condensateur augmentant à mesure que le corps de l'utilisateur se rapproche de l'électrode plate ; et un élément surveillant un changement d'impédance du circuit RC et configuré en réponse à une augmentation de l'impédance pour envoyer un signal.

15. Système selon l'une des revendications précédentes, dans lequel l'électrode plate comprend une plaque de cuivre ou d'aluminium.
